# EUROPEAN PATENT APPLICATION

(11) **EP 4 764 920 A1**
(43) Date of publication of application: **24.06.2026**
(21) Application number: 24223603.2
(22) Date of filing: 30.12.2024
(51) Int. Cl.: G06F 21/57, H04L 9/40

(54) **CYBERSECURITY TEST RECOMMENDATION FRAMEWORK**

(30) Priority: 23.12.2024 PT 2024119932
(71) Applicant: Nos Technology, 4460-191 Senhora da Hora, Porto (PT)
(72) Inventor: PINTO BORGES, RUI PEDRO, 4460-191 SENHORA DA HORA, PORTO (PT); SILVA RODRIGUES, VALTER, 4460-191 SENHORA DA HORA, PORTO (PT)
(74) Representative: do Nascimento Gomes, Rui

(57) **Abstract**

It is an object of the present disclosure a method for generating a cybersecurity test recommendation. Central to the realisation of the test recommendation is the use of a knowledge base model (2) and an inference engine (3) to provide personalised cybersecurity test recommendations (c) to a system (1), based on system (a) and test parameters, in a more accurate and efficient way.

## Description

### TECHINCAL FIELD

The present disclosure is enclosed in the technical field of cybersecurity vulnerability assessment of systems. In particular, it relates to system and methods for generating cybersecurity test recommendations.

### PRIOR ART

Nowadays, the vast majority of organisations are already represented on the internet, using digital systems that allow integration with the digital environment and consequent interaction with other systems.

However, this increase in the digital representation has been accompanied by a steady rise in cybercrime, which takes advantage of the weaknesses in organisations' digital systems. In fact, in the current digital landscape, organisations face increasing cybersecurity threats that require effective testing to identify and mitigate risks. Although this problem affects organisations regardless of their size or the industrial sector in which they operate, it can be seen that those that typically suffer the most from cyber-attacks are those that invest the least in cybersecurity, either due to a lack of financial resources or a mere lack of knowledge and know-how about cybersecurity. This translates into a lack of diagnosis and consequent insufficient cybersecurity planning, which prevents the early identification and correction of deficiencies in the organisational systems.

In addition, each organisation has specific characteristics that could place it in a specific risk scenario, and which would therefore require it to meet certain needs when it comes to carrying out cybersecurity tests. While there are already tools, frameworks, methodologies and processes for assessing cybersecurity vulnerabilities, which allow an organisation to understand the maturity and cybersecurity posture of its systems, it is clear that some organisations do not know how to act and have difficulty accessing specialised solutions to protect themselves.

Therefore, it is necessary to find a viable technical solution that helps organisations identify the right cybersecurity practices, taking into account their characteristics and the characteristics of their assets.

The present solution intends to innovatively overcome such issues.

### SUMMARY OF THE DISCLOSURE

It is an object of the present disclosure a method for generating a cybersecurity test recommendation. Central to the realisation of the test recommendation is the use of a knowledge base model and an inference engine to provide personalised cybersecurity test recommendations, based on system and test parameters, in a more accurate and efficient way.

More specifically, the present disclosure relates to a method for generating cybersecurity test recommendations, which includes the steps of constructing a knowledge base model for cybersecurity test recommendations, generating system state vectors and test recommendation vectors, and defining a set of rules to establish logical relationships between these vectors. An inference engine is designed to implement the knowledge base model and apply these rules to system information, defining the characteristics of the system being analysed, in order to generate cybersecurity test recommendations based on specific system parameters. The characteristics that define the methodology herein disclosed make it suitable for implementation as part of an integrated and comprehensive cybersecurity test recommendation platform, enabling it to process high volumes of data, allowing the knowledge base from which recommendations are made to grow constantly.

### DESCRIPTION OF FIGURES

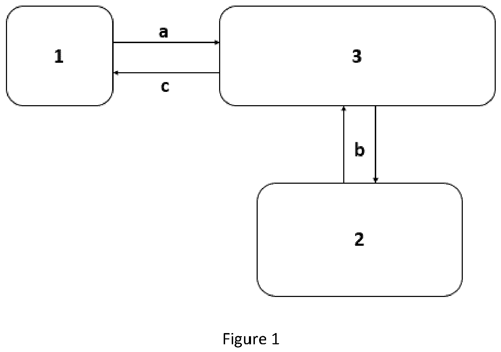

Figure 1 refers to a block diagram illustrating the cybersecurity test recommendation framework described in the present application, wherein the reference signs represent:
1- system under analysis;
2 - cybersecurity test recommendation knowledge base model;
3 - cybersecurity test recommendation inference engine;
a - system information;
b - inference action;
c - cybersecurity test recommendation.

### DETAILED DESCRIPTION

The more general configurations of the present disclosure are described in the Summary of the disclosure. Such configurations are detailed below in accordance with other advantageous and/or preferred embodiments of implementation of the present disclosure.

The present application offers an innovative and effective way of recommending cybersecurity tests that can be customised according to the particular characteristics that define an organisation and that can put it at different risk levels. In this sense, the solution presented responds to the need for accessible and adaptable data-based solutions to protect organisational systems (1) and data against cyber threats.

In this context, an organisation is represented by its organisational systems (1), which are broadly defined as computer systems that are connected to each other, as well as to computer systems outside the organisation, and in which communication takes place through connections to communication networks within the organisation or to external communication networks.

According to a preferred realisation of the method, it is comprised by the steps of:
- Constructing a cybersecurity test recommendation knowledge base model (2);
- Designing a cybersecurity test recommendation inference engine (3);
- Collecting system information (a);
- Applying (b) the inference engine (3) to system information (a); and
- Generating a cybersecurity test recommendation (c).

This methodology can be implemented and integrated into a more comprehensive cybersecurity test recommendation platform, which defines an operating ecosystem linking different Entities, such as cybersecurity test providers, client organisations, certification and/or regulatory authorities.

According to the first step of the method, related to the construction of the cybersecurity test recommendation knowledge base model (2), it includes generating system state vectors, each defined by at least one system reference parameter, and generating test recommendation vectors, each defined by at least one test reference parameter.

Specifically, a system state vector comprises a plurality of system reference parameters used to define an organisation and its associated computer systems, depending on the different aspects that may influence the definition of a level of risk of exposure to a cyber-attack. The system reference parameter may relate to: size of the organization (small, medium, large), industry sector (healthcare, finance, retail,...), digital applications provided (website, mobile app, API,...), data sensitivity (low, medium, high), information security policy (yes, no), list of technologies used, geographical location, business model (online, physical store, hybrid), cyber risk appetite level (low, medium, high) and past cybersecurity incidents (yes, no). Other parameters that can characterise the organisation's activity and its systems may be used in addition to or instead of any of the aforementioned system reference parameters. The configuration of these parameters allows for the definition of a plurality of system state vectors that serve as reference for cataloguing the different organisations subject of the analysis.

Similarly, a test recommendation vector comprises a plurality of test reference parameters used to define cybersecurity tests that can be recommended depending on the characteristics of the organisation. The test reference parameter may relate to: vulnerability list (yes, no), risk analysis (yes, no), test intensity (basic, intermediate, advanced), data security (yes, no), network security (yes, no), application security (yes, no), cloud security (yes, no), penetration testing (yes, no), automated testing (yes, no). Other parameters that are able to characterise a cybersecurity test may be used in addition to or instead of any of the aforementioned test reference parameters.

Also, according to the first step of the method, a set of rules is defined to establish logical relationships between the system state vectors, defining the characteristics and needs of an organization, and the test recommendation vectors, in order to recommend the most appropriate cybersecurity tests.

In particular, the set of rules of the cybersecurity test recommendation knowledge base model use the system reference parameters and the test reference parameters to define:
- logical constraints,
- system-test constraints, to relate a system state vector with a type of cybersecurity test; and
- recommendation constraints, to select a cybersecurity test taking into account the system reference parameters.

The logical constraints may relate to a logical relation between at least two test reference parameters and /or between at least one system reference parameter and at least one test reference parameter. For example, it may relate to the following test reference parameters: vulnerability list and penetration testing; and / or it may relate to a system reference parameter and a test reference parameter, such as:
- past cybersecurity incidents and test intensity;
- business model and network security;
- digital applications provided and application security;
- data sensitivity and data security;
- list of technologies used and cloud security.

The system-test constraints may relate to logical relations established between system reference parameters and test reference parameters, in particular:
- size of the organization is related to test intensity;
- size of the organization and data sensitivity are related to test intensity; and
- cyber risk appetite level is related to test duration.

Finally, the recommendation constraints may relate to logical relations established between system reference parameters and test reference parameters, in particular:
- past cybersecurity incidents and cyber risk appetite level are related to vulnerability list;
- cyber risk appetite level and data sensitivity is related to risk analysis;
- cyber risk appetite level, digital applications provided and past cybersecurity incidents is related to penetration testing and automated testing;
- size of the organization and data sensitivity is related to test intensity.

These rules make it possible to create a knowledge base that enables the complete definition of an organisation's risk level, defined according to its characteristics and consequent security needs, and relate it to a cybersecurity solution capable of identifying at least one cybersecurity test appropriate to the organisation's reality.

According to the second step of the method, related to the design of the cybersecurity recommendation test inference engine (3), it involves the implementation of the cybersecurity recommendation test knowledge base model (2), in order to create an inference engine that correlates system parameters (a) with system state vectors and cybersecurity test vectors. As it is based on artificial intelligence, this methodology allows for continuous, real-time optimisation of the recommendations provided, which is reflected in the continuous improvement in the alignment between the characteristics of an organisation and the types of tests that are recommended.

For that purpose, according to the third step of the method, information (a) about an organisational system (1) is collected, which may include receiving said information directly from the system (1). More particularly, this step implies gathering data (a) related to at least one system parameter, such as organization size, industry sector, type of digital applications provided, data sensitivity, among others. By using advanced data analysis and artificial intelligence, the methodology is able to optimise the quantitative and semantic correlation of the data collected from organisations. As a result, it is possible to provide optimised recommendations from a reduced set of data (a) provided by organisations. This data (a) can be transmitted via a data file of the type PDF, JSON or CSV.

According to a fourth step of the method, the inference engine (3) is applied to match the system parameters (a) with a system state vector and with a cybersecurity test vector, thereby generating a cybersecurity test recommendation (c). The processing scheme put in place allows the methodology to adapt to processing a high volume of data, i.e. a large number of test requests, which, combined with the use of artificial intelligence, favours the growth of the knowledge base from which recommendations are generated.

A cybersecurity test recommendation (c) includes the identification of at least one cybersecurity test to be performed by the system (1), which may belong to one of the following types of cybersecurity tests: vulnerability identification test, automated pentesting test, cyber risk rating test and static code analysis test.

In addition, another advantage associated with the method of the present disclosure is that the recommendation (c) made represents standardised information and is therefore independent of the metrics of each cybersecurity service provider.

The method also includes the step of implementing a user interface platform to receive the information (a) from a system and transmit the cybersecurity recommendations (c) to a user who is associated with the organisation being analysed. To this end, the user interface platform is integrated with at least the inference engine (3) in order to forward the received system information (a) to it and then be able to receive the cybersecurity recommendation (c) from the inference engine (3) in order to transmit it to the user.

The cybersecurity recommendation could take the form of a report that includes at least the identification of a cybersecurity test that the organisation will have to submit its systems (1) to. For security reasons, each report can also be associated with a metadata or watermark to guarantee the authenticity and ownership of the report.

It is also an object of the present disclosure, a system for generating a cybersecurity test recommendation comprising one or more processors configured to implement the method previously described.

Of course, the preferred embodiments shown above are combinable, in the different possible forms, being herein avoided the repetition all such combinations.

## Claims

1. Method for generating a cybersecurity test recommendation; the method comprising the steps of:
- constructing a cybersecurity test recommendation knowledge base model (2) by:
- generating system state vectors, each vector being defined by at least one system reference parameter, and cybersecurity test recommendation vectors, each vector being defined by at least one test reference parameter;
- defining a set of rules to at least establish a logic relationship between a system state vector and a cybersecurity test vector;
- designing a cybersecurity test recommendation inference engine (3) by implementing the cybersecurity test recommendation knowledge base model (2);
- collecting information (a) about a system (1), said information relating to at least one system parameter;
- applying (b) the cybersecurity test recommendation inference engine (3) to match the system parameters with a system state vector and with a cybersecurity test vector, thereby
- generating a cybersecurity test recommendation (c).

2. Method according to claim 1, wherein a system reference parameter relates to, at least: size of the organization, industry sector, digital applications provided, data sensitivity, information security policy, list of technologies used, geographical location, business model, cyber risk appetite level and past cybersecurity incidents.

3. Method according to any of the previous claims, wherein a test reference parameter relates to, at least: vulnerability list, risk analysis, test intensity, data security, network security, application security, cloud security, penetration testing and automated testing.

4. Method according to any of the previous claims wherein the set of rules of the cybersecurity test recommendation knowledge base model (3) use the system reference parameters and the test reference parameters to define:
- logical constraints,
- system-test constraints, to relate a system state vector with a type of cybersecurity test; and
- recommendation constraints, to select a test taking into account the system reference parameters.

5. Method according to claim 4, wherein the logical constraints relate to:
- a logical relation between at least two test reference parameters; and
- a logical relation between at least one system reference parameter and at least one test reference parameter.

6. Method according to claim 5, wherein a logical constrain defines:
- a relation between the following test reference parameters: vulnerability list and penetration testing; and / or
- a relation between a system reference parameter and a test reference parameter, such as:
- past cybersecurity incidents and test intensity;
- business model and network security;
- digital applications provided and application security;
- data sensitivity and data security;
- list of technologies used and cloud security.

7. Method according to any of the claims 4 to 6, wherein the system-test constraints relate to logical relations established between system reference parameters and test reference parameters; preferably, said system-test constraints relate the following parameters:
- size of the organization is related to test intensity;
- size of the organization and data sensitivity are related to test intensity; and
- cyber risk appetite level is related to test duration.

8. Method according to any of the claims 4 to 7, wherein the recommendation constraints relate to logical relations established between system reference parameters and test reference parameters, in particular:
- past cybersecurity incidents and cyber risk appetite level are related to vulnerability list;
- cyber risk appetite level and data sensitivity is related to risk analysis;
- cyber risk appetite level, digital applications provided and past cybersecurity incidents is related to penetration testing and automated testing;
- size of the organization and data sensitivity is related to test intensity.

9. Method according to any of the previous claims, wherein the cybersecurity test recommendation (c) includes the identification of at least one cybersecurity test to be performed by the system (1).

10. Method according to claim 9, wherein a cybersecurity test belongs to one of the following types of cybersecurity tests: vulnerability identification test, automated pentesting test, cyber risk rating test and static code analysis test.

11. Method according to any of the previous claims wherein the step of collecting information (a) about the system (1) comprises receiving said information from the system (1).

12. Method according to any of the previous claims further comprising the step of establishing a User Interface Platform for:
- receiving system information (a) from a user;
- transmitting a cybersecurity test recommendation (c) to a user.

13. Method according to any of the previous claims, further comprising the step of generating a cybersecurity test recommendation report, including at least the cybersecurity test recommendation (c).

14. Method according to claims 12 and 13, further comprising:
- associating a water mark to the cybersecurity test recommendation report; and
- transmitting the report to a user.

15. System for generating a cybersecurity test recommendation comprising one or more processors configured to implement the method according to any of the previous claims 1 to 14.
